# EUROPEAN PATENT APPLICATION

(11) **EP 3 663 367 A1**
(43) Date of publication of application: **10.06.2020**
(21) Application number: 18210574.2
(22) Date of filing: 05.12.2018
(51) Int. Cl.: C09D 11/102, C09D 11/34, C09D 179/08, C08G 73/10, C08L 79/08

(54) **CORE-SHELL FILAMENT, METHOD OF FORMING A CORE-SHELL FILAMENT, METHOD OF FORMING AN ARTICLE BY FUSED FILAMENT FABRICATION, AND ARTICLE FORMED THEREBY**

(71) Applicant: SABIC Global Technologies B.V., 4612 PX Bergen op Zoom (NL)
(72) Inventor: TENG, Weibing, Pittsfield, MA 01201 (US); BIHARI, Malvika, Mt. Vernon, IN 47620 (US); HARDING, Gerould, Pittsfield, MA 01201 (US)
(74) Representative: Lang, Johannes

(57) **Abstract**

A core-shell filament useful for fused filament fabrication includes a core, and a shell surrounding and in contact with the core. The core contains a block polyetherimide-polysiloxane. The shell contains a polyetherimide. When the filament is used in fused filament fabrication for printing a three-dimensional article, the core material remains surrounded by shell material. So, the printed article exhibits good interlayer adhesion provided by the shell material, and good ductility provided by the core material.

## Description

### BACKGROUND OF THE INVENTION

Fused filament fabrication is a method of printing three-dimensional objects. In this method, a continuous filament of thermoplastic material is fed to a moveable, heated printer head, where the material is melted, extruded from the printer head, and deposited on a growing workpiece that becomes the desired three-dimensional object. For three-dimensional objects requiring high heat resistance, continuous filaments containing a polyetherimide have been employed. In an effort to improve the impact strength of printed objects, filaments containing polyetherimide-polysiloxane copolymers have been used, but very poor adhesion between adjacent printed layers was observed. There therefore remains a need for filaments that provide the heat resistance and interlayer adhesion while also providing improved impact strength in the printed objects.

### BRIEF SUMMARY OF EMBODIMENTS OF THE INVENTION

One embodiment is a core-shell filament for fused filament fabrication, comprising: a core; and a shell surrounding and in contact with the core; wherein the core comprises a core composition comprising, based on the weight of the core composition, at least 50 weight percent of a block polyetherimide-polysiloxane; and wherein the shell comprises a shell composition comprising, based on the weight of the shell composition, at least 30 weight percent of a polyetherimide.

Another embodiment is a method of making a core-shell filament, comprising: coextruding a core composition and a shell composition to form a core-shell filament comprising a core and a shell surrounding and in contact with the core; wherein the core composition comprises, based on the weight of the core composition, at least 50 weight percent of a block polyetherimide-polysiloxane; and wherein the shell composition comprises, based on the weight of the shell composition, at least 30 weight percent of a polyetherimide.

Another embodiment is a method of fused filament fabrication, comprising: melt extruding a core-shell filament to form an extrudate; and depositing the extrudate in a predetermined pattern to form a plurality of layers, wherein each layer contacts at least one other layer; wherein the core-shell filament comprises a core, and a shell surrounding and in contact with the core; wherein the core comprises a core composition comprising, based on the weight of the core composition, at least 50 weight percent of a block polyetherimide-polysiloxane; and wherein the shell comprises a shell composition comprising, based on the weight of the shell composition, at least 30 weight percent of a polyetherimide.

These and other embodiments are described in detail below.

### BRIEF DESCRIPTION OF THE DRAWINGS

Figure 1 is a diagram of print (layer) orientations for exemplary test articles useful for determining tensile properties and Izod impact strengths.
Figure 2(a) is an optical micrograph of a cross-section of a test article prepared by fused filament fabrication using the Example 3 filament; Figure 2(b) is the same optical micrograph with added lines and labels to facilitate identification of different regions.

### DETAILED DESCRIPTION OF THE INVENTION

The present inventors have determined that a core-shell filament having specific core and shell compositions provides improved impact strength in three-dimensional articles printed by fused filament fabrication while also preserving the beneficial heat resistance and interlayer adhesion of polyetherimide-based filaments. Thus, one embodiment is a core-shell filament for fused filament fabrication, comprising: a core; and a shell surrounding and in contact with the core; wherein the core comprises a core composition comprising, based on the weight of the core composition, at least 50 weight percent of a block polyetherimide-polysiloxane; and wherein the shell comprises a shell composition comprising, based on the weight of the shell composition, at least 30 weight percent of a polyetherimide.

The core-shell filament comprises a core, and a shell surrounding and in contact with the core. In some embodiments, the filament comprises, based on the volume of the filament, 10 to 90 volume percent of the core and 10 to 90 volume percent of the shell. Within the range of 10 to 90 volume percent, the volume percent of the core can be 20 to 90 volume percent, or 30 to 80 volume percent, or 30 to 70 volume percent. Within the range of 10 to 90 volume percent, the volume percent of the shell can be 10 to 80 volume percent, or 20 to 70 volume percent, or 30 to 70 volume percent.

In some embodiments, the filament has a diameter in the range of 1 to 5 millimeters. Within this range, the diameter can be in the range of 1 to 3 millimeters, or 1.5 to 2 millimeters. In some embodiments, the filament diameter is characterized by an average and a standard deviation, and the average is in the range of 1 to 5 millimeters, and the standard deviation is in the range of 0.001 to 0.03 millimeter. Filament diameter average and standard deviation can be determined during filament fabrication using a dual-axis, high speed, high precision scanning micrometer. Such micrometers are commercially available from, for example, Keyence Corporation (Itasca, Illinois, USA).

The core comprises a core composition, which in turn comprises a block polyetherimide-polysiloxane. A block polyetherimide-polysiloxane is a copolymer comprising at least one polyetherimide block and at least one polysiloxane block. In some embodiments, the block polyetherimide-polysiloxane comprises multiple polyetherimide blocks and multiple polysiloxane blocks.

The at least one polyetherimide block comprises etherimide units having the formula 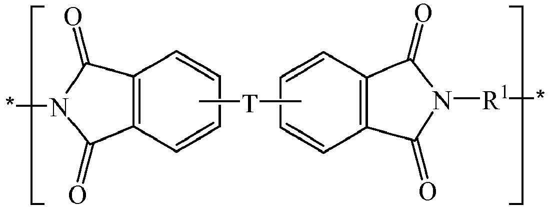 wherein T is -O- or a group of the Formula -O-Z-O- wherein the divalent bonds of the -O- or the -O-Z-O- group are in the 3,3', 3,4', 4,3', or the 4,4' positions of the phthalimide groups; Z includes divalent moieties of the formula 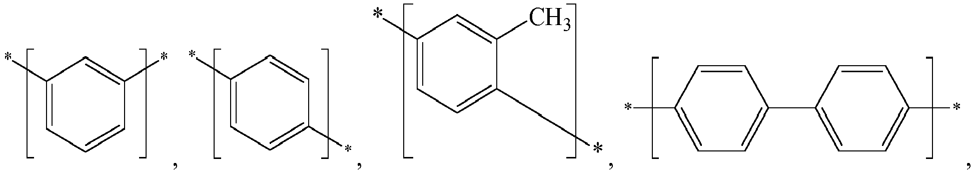 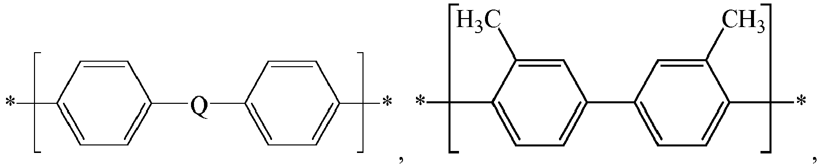 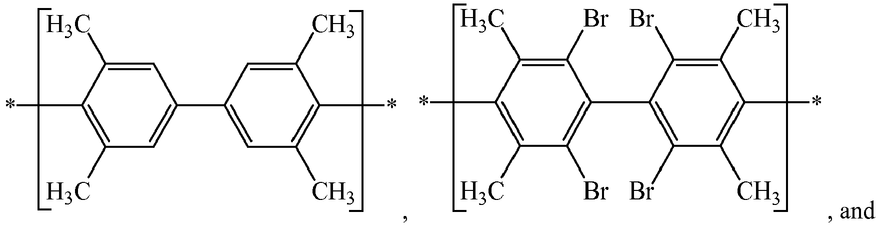 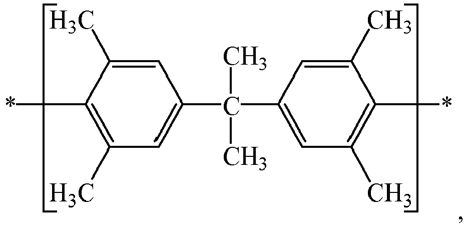 wherein Q is a divalent moiety that can be -O-, -S-, -C(O)-, -SO₂-, -SO-, -C_{y}H_{2y}- wherein y is 1 to 8, or -CₚH_{q}Fᵣ- wherein p is 1 to 8 and q is 0 to 15 and r is 1 to 16 and q + r = 2p; and R¹ is independently at each occurrence a divalent group selected from the group consisting of substituted or unsubstituted divalent aromatic hydrocarbon moieties having 6 to 20 carbons, straight or branched chain alkylene moieties having 2 to 20 carbons, cycloalkylene moieties having 3 to 20 carbon atom, and divalent moieties of the general formula 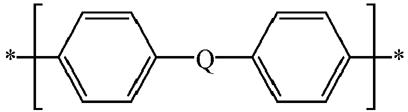 wherein Q is defined above. As used herein, "substituted" means including at least one substituent such as a halogen (i.e., F, Cl, Br, I), hydroxyl, amino, thiol, carboxyl, carboxylate, amide, nitrile, sulfide, disulfide, nitro, C₁-C₁₈ alkyl, C₁-C₁₈ alkoxyl, C₆-C₁₈ aryl, C₆-C₁₈ aryloxyl, C₇-C₁₈ alkylaryl, or C₇-C₁₈alkylaryloxyl. So, when the hydrocarbyl residue is described as substituted, it can contain heteroatoms in addition to carbon and hydrogen. In some embodiments, the at least one polyetherimide block comprises etherimide units having the structure 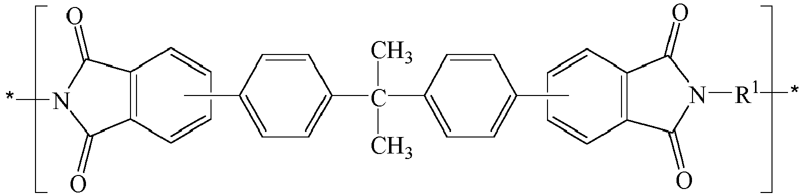 wherein R¹ is meta-phenylene or para-phenylene.

The at least one polysiloxane block comprises diorganosiloxane units of the formula 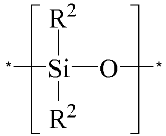 wherein each occurrence of R² is independently C₁-C₁₃ hydrocarbyl. As used herein, the term "hydrocarbyl", whether used by itself, or as a prefix, suffix, or fragment of another term, refers to a residue that contains only carbon and hydrogen unless it is specifically identified as "substituted hydrocarbyl". The hydrocarbyl residue can be aliphatic or aromatic, straight-chain, cyclic, branched, saturated, or unsaturated. It can also contain combinations of aliphatic, aromatic, straight chain, cyclic, bicyclic, branched, saturated, and unsaturated hydrocarbon moieties. When the hydrocarbyl residue is described as substituted, it can contain heteroatoms in addition to carbon and hydrogen. In the context of the diorganosiloxane units, examples of suitable hydrocarbyl groups include C₁-C₁₃ alkyl (including alkyl groups that are linear, branched, cyclic, or a combination of at least two of the foregoing), C₂-C₁₃ alkenyl, C₆-C₁₂ aryl C₇-C₁₃ arylalkyl, and C₇-C₁₃ alkylaryl. The foregoing hydrocarbyl groups can, optionally, be fully or partially halogenated with fluorine, chlorine, bromine, iodine, or a combination of at least two of the foregoing. In some embodiments, each occurrence of R² is halogen-free. In some embodiments, each occurrence of R² is methyl.

In some embodiments, the at least one polysiloxane block comprises 2 to 100 diorganosiloxane units. Within this range, the number of diorganosiloxane units can be 2 to 50, or 5 to 20.

In some embodiments, the at least one polyetherimide block comprises etherimide units having the structure 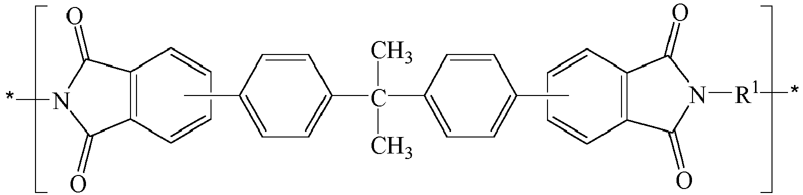 wherein R¹ is meta-phenylene or para-phenylene, and the at least one polysiloxane block comprises dimethylsiloxane units.

Methods of forming block polyetherimide-polysiloxanes are known and described, for example, in U.S. Patent Application Publication No. US 2008/0223602 A1 of Gallucci et al., and U.S. Patent Nos. 4,404,350 to Ryang, 4,808,686 and 4,690,997 to Cella et al., and 8,013,251 to Bhandari et al. Block polyetherimide-polysiloxanes are also commercially available as, for example, SILTEM™ Resins STM1500, STM1600, and STM1700 from SABIC.

Block polyetherimide-polysiloxanes having extended siloxane blocks can be made by forming an extended siloxane oligomer and then using the extended siloxane oligomer to make the block copolymer. The extended siloxane oligomer can be made by reacting a diaminosiloxane and a dianhydride wherein either the diaminosiloxane or the dianhydride is present in 10 to 50% molar excess. "Molar excess" as used in this context is defined as being in excess of the other reactant. For example, if the diaminosiloxane is present in 10% molar excess then for 100 moles of dianhydride are present there are 110 moles of diaminosiloxane.

The diaminosiloxane can have the formula 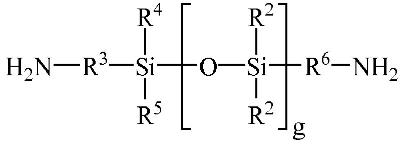 wherein R² is independently at each occurrence C₁-C₁₃ hydrocarbyl; R³ and R⁶ are independently at each occurrence divalent groups selected from the group consisting of substituted or unsubstituted, saturated, unsaturated, or aromatic divalent monocyclic groups having 5 to 30 carbon atoms, substituted or unsubstituted, saturated, unsaturated, or aromatic divalent polycyclic groups having 5 to 30 carbon atoms, substituted or unsubstituted alkylene groups having 1 to 30 carbon atoms, and substituted or unsubstituted alkenylene groups having 2 to 30 carbon atoms; R⁴ and R⁵ are independently at each occurrence monovalent groups selected from the group consisting of substituted or unsubstituted, saturated, unsaturated, or aromatic monovalent monocyclic groups having 5 to 30 carbon atoms, substituted or unsubstituted, saturated, unsaturated, or aromatic monovalent polycyclic groups having 5 to 30 carbon atoms, substituted or unsubstituted alkyl groups having 1 to 30 carbon atoms, and substituted or unsubstituted alkenyl groups having 2 to 30 carbon atoms; and each occurrence of g is independently 2 to 30. In a specific embodiment, each occurrence of R², R⁴, and R⁵ is methyl, and each occurrence of R³ and R⁶ is independently C₂-C₆ alkylene. The synthesis of diaminosiloxanes is known and taught, for example, in U.S. Patent Nos. 3,185,719 to Prober and 4,808,686 to Cella et al.

In some embodiments, the block polyetherimide-polysiloxane has a polysiloxane content of 5 to 60 weight percent and a polyetherimide content of 40 to 95 weight percent, based on the total weight of the block polyetherimide-polysiloxane. Within the range of 5 to 60 weight percent, the polysiloxane content can be 10 to 50 weight percent. Within the range of 40 to 95 weight percent, the polyetherimide content can be 50 to 90 weight percent.

For a block polyetherimide-polysiloxane, weight percent polysiloxane accounts for the weight of the polysiloxane macromer used to prepare the polyetherimide-polysiloxane copolymer. For example, if the polysiloxane blocks of a block polyetherimide-polysiloxane are derived from an *alpha,omega-bis*(3-amino-1-propyl)polydimethylsiloxane having on average about ten dimethylsiloxane units per molecule, and if the block polyetherimide-polysiloxane is characterized as having a polysiloxane content of about 40 weight percent, then the copolymer has, based on the weight of the copolymer, about 40 weight percent of polysiloxane units having, on average, the formula

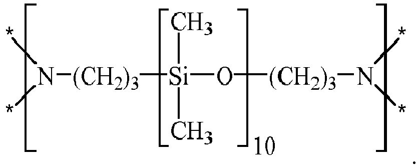

The core composition comprises, based on the total weight of the core composition, at least 50 weight percent of the block polyetherimide-polysiloxane. In some embodiments, the block polyetherimide-polysiloxane content of the core composition is 50 to 100 weight percent, or 70 to 100 weight percent, or 90 to 100 weight percent.

The shell of the core-shell filament comprises a shell composition, which in turn comprises a polyetherimide. Polyetherimides comprise etherimide units having the formula 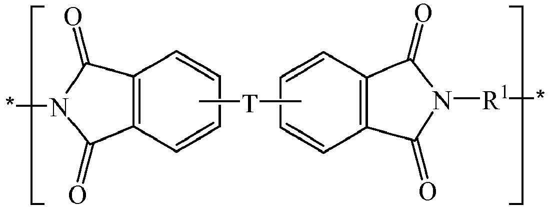 wherein T is -O- or a group of the Formula -O-Z-O- wherein the divalent bonds of the -O- or the -O-Z-O- group are in the 3,3', 3,4', 4,3', or the 4,4' positions of the phthalimide groups; Z includes divalent moieties of the formula 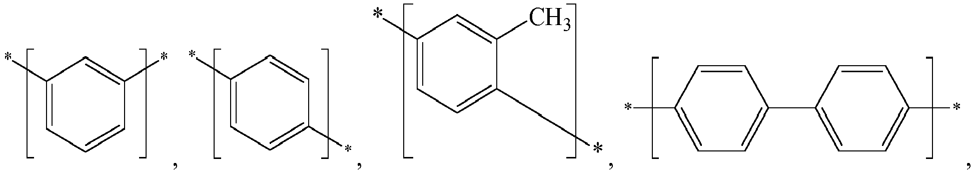 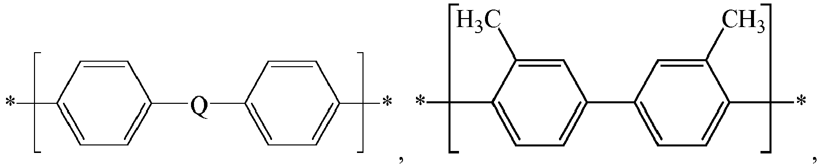 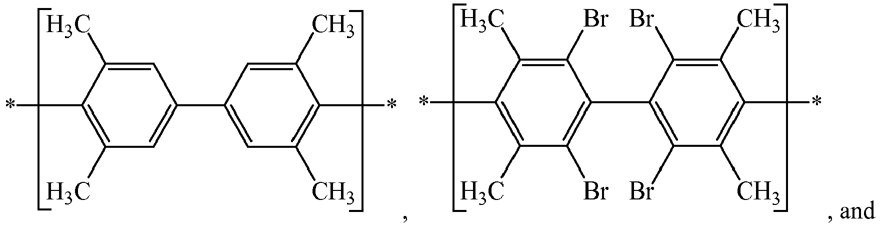 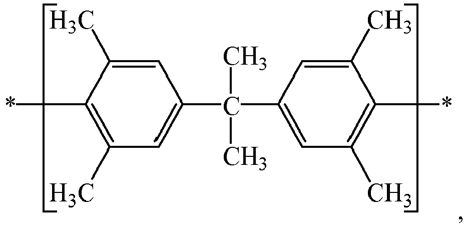 wherein Q is a divalent moiety that can be -O-, -S-, -C(O)-, -SO₂-, -SO-, -C_{y}H_{2y}- wherein y is 1 to 8, or -CₚH_{q}Fᵣ- wherein p is 1 to 8 and q is 0 to 15 and r is 1 to 16 and q + r = 2p; and R¹ is independently at each occurrence a divalent group selected from the group consisting of substituted or unsubstituted divalent aromatic hydrocarbon moieties having 6 to 20 carbons, straight or branched chain alkylene moieties having 2 to 20 carbons, cycloalkylene moieties having 3 to 20 carbon atom, and divalent moieties of the general formula 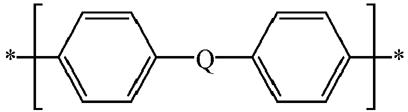 wherein Q is defined above. As used herein, "substituted" means including at least one substituent such as a halogen (i.e., F, Cl, Br, I), hydroxyl, amino, thiol, carboxyl, carboxylate, amide, nitrile, sulfide, disulfide, nitro, C₁-C₁₈ alkyl, C₁-C₁₈ alkoxyl, C₆-C₁₈ aryl, C₆-C₁₈ aryloxyl, C₇-C₁₈ alkylaryl, or C₇-C₁₈alkylaryloxyl. So, when the hydrocarbyl residue is described as substituted, it can contain heteroatoms in addition to carbon and hydrogen. In some embodiments, the polyetherimide comprises etherimide units having the structure 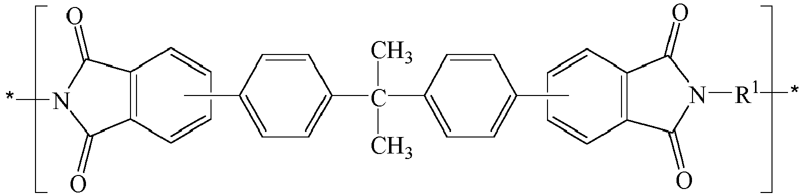 wherein R¹ is meta-phenylene or para-phenylene. In some embodiments, the polyetherimide is free of halogens. The number of etherimide units in the polyetherimide can be, for example, 10 to 1,000, or 20 to 500.

Included among the many methods of making polyetherimides are those disclosed in U.S. Patent Nos. 3,847,867 to Heath et al., 3,850,885 to Takekoshi et al., 3,852,242 and 3,855,178 to White, 3,983,093 to Williams et al., and 4,443,591 to Schmidt et al. Polyetherimides are also commercially available as, for example, ULTEM™ resins from SABIC.

The shell composition comprises at least 30 weight percent of a polyetherimide, based on the total weight of the shell composition. Within this limit, the polyetherimide content of the shell composition can be 30 to 100 weight percent, or 35 to 80 weight percent, or 40 to 60 weight percent.

In addition to the polyetherimide, the shell composition can, optionally, further comprise a block polyestercarbonate. The block polyestercarbonate comprises at least one polyester block comprising resorcinol ester units having the structure 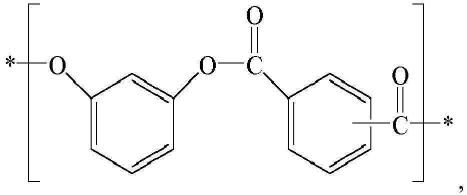 and at least one polycarbonate block comprising carbonate units having the structure 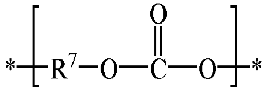 wherein at least 60 mole percent of the total number of R⁷ groups are aromatic divalent groups. In some embodiments, the block polyestercarbonate comprises multiple polyester blocks and multiple polycarbonate blocks. In some embodiments, the aromatic divalent groups are C₆-C₂₄ aromatic divalent groups. When not all R⁷ groups are aromatic, the remainder are C₂-C₂₄ aliphatic divalent groups. In some embodiments, each R⁷ is a radical of the formula 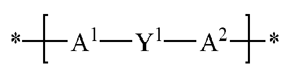 wherein each of A¹ and A² is independently a monocyclic divalent aryl radical and Y¹ is a bridging radical having one or two atoms that separate A¹ from A². In some embodiments, one atom separates A¹ from A². Illustrative examples of radicals of this type are -O-, -S-, -S(O)-,-S(O)₂-, -C(O)-, methylene, cyclohexylmethylene, 2-[2.2.1]-bicycloheptylidene, ethylidene, isopropylidene, neopentylidene, cyclohexylidene, cyclopentadecylidene, cyclododecylidene, and adamantylidene. The bridging radical Y¹ can be a C₁-C₁₂ (divalent) hydrocarbylene group. Specific examples of Y¹ include methylene (-CH₂-; also known as methylidene), ethylidene (-CH(CH₃)-), isopropylidene (-C(CH₃)₂-), and cyclohexylidene.

In some embodiments, the at least one polyester block comprises resorcinol ester units having the structures 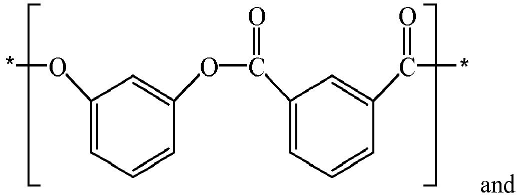 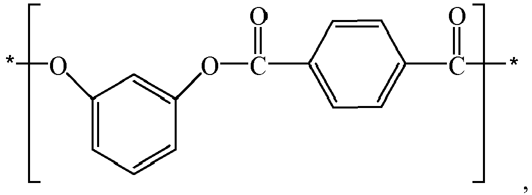 and the at least one polycarbonate block comprises bisphenol A carbonate units having the structure

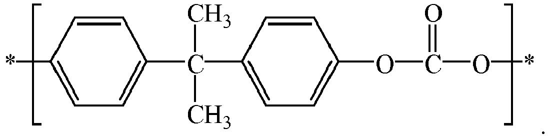

In some embodiments, the block polyestercarbonate comprises, based on the total moles of ester units and carbonate units in the block polyestercarbonate, 5 to 95 mole percent of ester units, and 5 to 95 mole percent of carbonate units. Within these ranges, the mole percent of ester units can be 50 to 90, and the mole percent of carbonate units can be 10 to 50 mole percent; or the mole percent of ester units can be 70 to 90, and the mole percent of carbonate units can be 10 to 30 mole percent. In a very specific embodiment, the block polyestercarbonate comprises 70 to 90 mole percent of resorcinol isophthalate/terephthalate ester units, 5 to 15 mole percent of resorcinol carbonate units, and 5 to 15 mole percent of bisphenol A carbonate units.

When the shell composition comprises a block polyestercarbonate, it can be present in an amount of 15 to 60 weight percent, based on the total weight of the shell composition. Within this range, the block polyestercarbonate content can be 30 to 50 weight percent, or 35 to 45 weight percent.

In addition to the polyetherimide, the shell composition can, optionally, further comprise a block polyestercarbonate-polysiloxane. A block polyestercarbonate-polysiloxane is a copolymer comprising at least one polyester block, at least one polycarbonate block, and at least one polysiloxane block. In some embodiments, the block polyestercarbonate-polysiloxane comprises multiple polyester blocks, multiple polycarbonate blocks, and multiple polysiloxane blocks. The at least one polyester block comprises resorcinol ester units having the structure 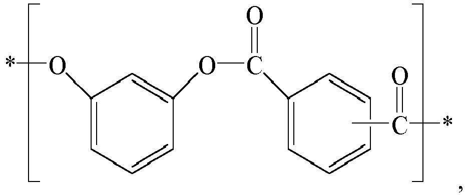 at least one polycarbonate block comprising carbonate units having the structure 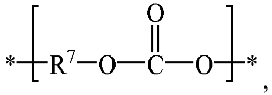 wherein at least 60 mole percent of the total number of R⁷ groups are aromatic divalent groups, and at least one polysiloxane block comprising diorganosiloxane units of the formula 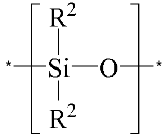 wherein each occurrence of R² is independently C₁-C₁₃ hydrocarbyl. In some embodiments, the resorcinol ester units comprise resorcinol isophthalate/terephthalate units, and the carbonate units comprise resorcinol carbonate units and bisphenol A carbonate units. In some embodiments, the at least one polysiloxane block has the structure 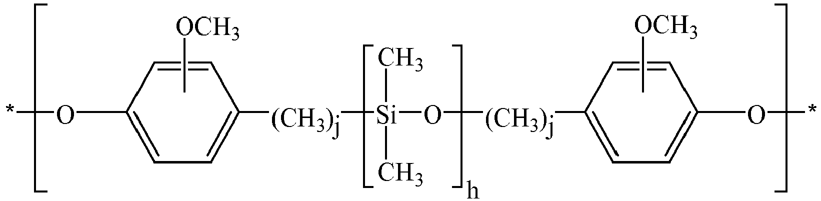 wherein h is, on average, 10 to 100, or 20 to 80; and each occurrence of j is independently 1 to 10, or 2 to 6. In a specific embodiment, the block polyestercarbonate-polysiloxane comprises, based on total moles of carbonate units and ester units, 70 to 90 mole percent of resorcinol isophthalate/terephthalate units, 5 to 15 mole percent of resorcinol carbonate units, 5 to 15 mole percent of bisphenol A carbonate units, and further comprises, based on the total weight of the block polyestercarbonate-polysiloxane, 0.2 to 4 weight percent, or 0.4 to 2 weight percent of polysiloxane blocks having the structure 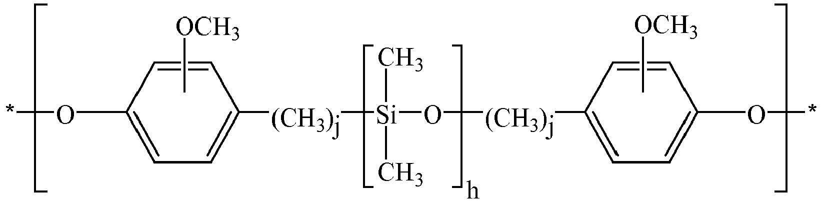 wherein h is, on average, 20 to 80; and each occurrence of j is independently 2 to 6.

For the block polyestercarbonate-polysiloxane, weight percent polysiloxane accounts for the weight of the polysiloxane macromer used to prepare the block polyestercarbonate-polysiloxane. For example, if the polysiloxane blocks are derived from a eugenol capped polydimethylsiloxane macromer having, on average, about 45 dimethylsiloxane units per molecule, and if the block polyestercarbonate-polysiloxane is characterized as having a polysiloxane content of about 20 weight percent, then the block polyestercarbonate-polysiloxane has, based on the weight of the block polyestercarbonate-polysiloxane, about 20 weight percent of polysiloxane units having, on average, the formula

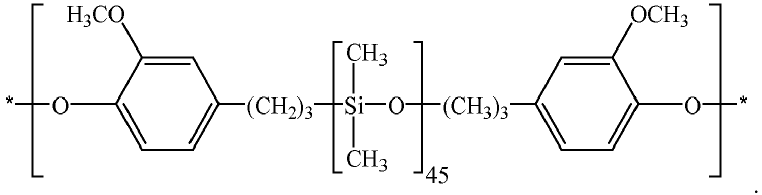

When the shell composition comprises a block polyestercarbonate-polysiloxane, it can be present in an amount of 10 to 30 weight percent, based on the total weight of the shell composition. Within this range, the block polyestercarbonate-polysiloxane content can be 15 to 25 weight percent.

In addition to the polyetherimide, the shell composition can, optionally, further comprise a block polycarbonate-polysiloxane. A block polycarbonate-polysiloxane is a polycarbonate copolymer comprising at least one polycarbonate block and at least one polysiloxane block. In some embodiments, the block polycarbonate-polysiloxane comprises multiple polycarbonate blocks and multiple polysiloxane blocks. The block polycarbonate-polysiloxane can be transparent, translucent, or opaque, depending on its composition.

The at least one polycarbonate block of the block polycarbonate-polysiloxane comprises carbonate units of the formula 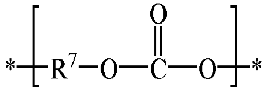 wherein at least 60 mole percent of the total number of R⁷ groups are aromatic divalent groups, and at least one polysiloxane block comprising diorganosiloxane units of the formula 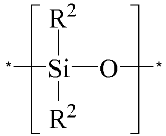 wherein each occurrence of R² is independently C₁-C₁₃ hydrocarbyl. In some embodiments, the aromatic divalent groups are C₆-C₂₄ aromatic divalent groups. When not all R⁷ groups are aromatic divalent groups, the remainder are C₂-C₂₄ aliphatic divalent groups. In some embodiments, each R⁷ is a radical of the formula 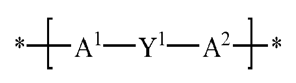 wherein A¹, A², and Y¹ are defined as above in the context of the block polyestercarbonate. In a specific embodiment, the at least one polycarbonate block comprises bisphenol A carbonate units. Examples of suitable R² groups include C₁-C₁₃ alkyl (including alkyl groups that are linear, branched, cyclic, or a combination of at least two of the foregoing), C₂-C₁₃ alkenyl, C₆-C₁₂aryl, C₇-C₁₃ arylalkyl, and C₇-C₁₃ alkylaryl. The foregoing hydrocarbyl groups can, optionally, be fully or partially halogenated with fluorine, chlorine, bromine, iodine, or a combination of at least two of the foregoing. In some embodiments, each occurrence of R² is halogen-free. In some embodiments, each occurrence of R² is methyl.

In some embodiments, the at least one polysiloxane block has the structure 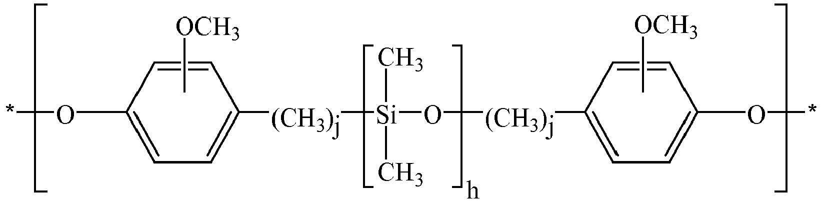 wherein h is, on average, 10 to 100, or 20 to 80; and each occurrence of j is independently 1 to 10, or 2 to 6. In a specific embodiment, the block polycarbonate-polysiloxane comprises, based on the weight of the block polycarbonate-polysiloxane, 50 to 95 weight percent of bisphenol A polycarbonate blocks and 5 to 50 weight percent of polysiloxane blocks having the structure 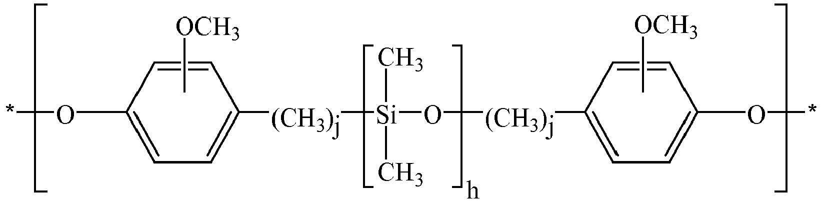 wherein h is, on average, 20 to 80; and each occurrence of j is independently 2 to 6. Within the range of 50 to 95 weight percent, the content of bisphenol A polycarbonate blocks can be 60 to 90 weight percent. Within the range of 5 to 50 weight percent, the content of polysiloxane blocks can be 10 to 40 weight percent.

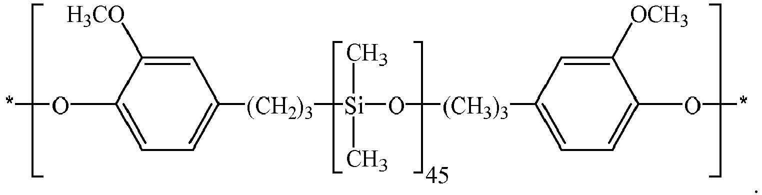

For the block polycarbonate-polysiloxane, weight percent polysiloxane accounts for the weight of the polysiloxane macromer used to prepare the block polycarbonate-polysiloxane. For example, if the polysiloxane blocks are derived from a eugenol capped polydimethylsiloxane macromer having, on average, about 45 dimethylsiloxane units per molecule, and if the block polycarbonate-polysiloxane is characterized as having a polysiloxane content of about 20 weight percent, then the block polycarbonate-polysiloxane has, based on the weight of the block polyestercarbonate-polysiloxane, about 20 weight percent of polysiloxane units having, on average, the formula

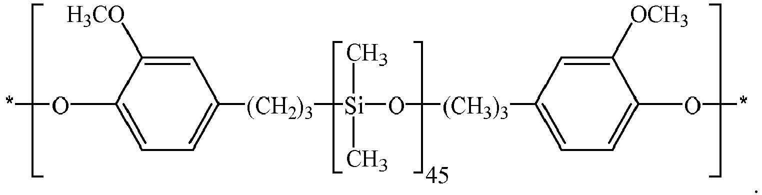

When the shell composition comprises a block polycarbonate-polysiloxane, it can be present in an amount of 4 to 20 weight percent, based on the total weight of the shell composition. Within this range, the block polycarbonate-polysiloxane content can be 5 to 15 weight percent.

In addition to the polyetherimide, the shell composition can, optionally, further comprise a block polyetherimide-polysiloxane that is the same as or different from the block polyetherimide-polysiloxane of the core composition. The structure and composition of the block polyetherimide-polysiloxane is described above in the context of the core composition. When the shell composition comprises a block polyetherimide-polysiloxane, it can be present in an amount of 1 to 10 weight percent, based on the total weight of the shell composition. Within this range, the block polyetherimide-polysiloxane content of the shell composition can be 1.5 to 6 weight percent.

In addition to the polyetherimide, the shell composition can, optionally, further comprise a core-shell impact modifier in which the core includes a polysiloxane and the shell includes a poly(alkyl (meth)acrylate). The core-shell impact modifier comprises, based on the weight of the core-shell impact modifier, 60 to 95 weight percent of a core comprising a polysiloxane, and 5 to 40 weight percent of a shell comprising a poly(alkyl (meth)acrylate). Within the range of 60 to 95, the weight percent of core can be 60 to 90, or 65 to 85. Within the range of 5 to 40, the weight percent of shell can be 10 to 40, or 15 to 35. The amount of the core is sometimes referred to herein as the rubber content.

The core of the core-shell impact modifier comprises a polysiloxane. The polysiloxane can be produced by emulsion copolymerization of monomers comprising a source of di-(C₁-C₁₂)-dihydrocarbylsiloxane units. The source of di-(C₁-C₁₂)-dihydrocarbylsiloxane units can comprise, for example, a cyclic dialkylsiloxane such as 1,3,5,7-octamethylcyclotetrasiloxane (D4), a silicon-containing monomer comprising two hydrolyzable groups, such as dimethyldimethoxysilane and/or methylphenyldimethoxysilane, or a combination thereof. In some embodiments, the polysiloxane comprises polydimethylsiloxane. The monomers used to form the polysiloxane can, optionally, include a crosslinking agent, a graftlinking agent, or a combination thereof. The crosslinking agent can comprise a silicon-containing monomer comprising three or more hydrolyzable groups, such as methyltriethoxysilane, tetrapropyloxysilane, or a combination thereof. The graftlinking agent can comprise a silicon-containing monomer comprising at least one more hydrolyzable group, and a polymerizable carbon-carbon double bond. Examples of graftlinking agents include methacryloyloxypropylmethoxydimethylsilane, methacryloyloxypropyldimethoxymethylsilane, vinyldimethoxymethylsilane, vinylphenylmethoxymethylsilane, vinylphenyldimethoxysilane, and combinations thereof.

The core can be produced by known emulsion polymerization methods, including those disclosed in U.S. Patent Nos. 2,891,920 to Hyde et al., 3,294,725 to Findlay et al., 6,153,694 to Miyatake et al., and U.S. Patent Application Publication No. US 2008/0242797 A1 of Saegusa et al. In some embodiments, the number average particle size of the core is 10 to 1,000 nanometers, or 20 to 500 nanometers, or 20 to 200 nanometers.

The shell of the core-shell impact modifier comprises a poly(alkyl (meth)acrylate). As used herein, the term "(meth)acrylate" means acrylate or methacrylate. In the context of the term "poly(alkyl (meth)acrylate)," the word "alkyl" refers to C₁-C₆-alkyl. The shell, which is formed in the presence of the core, can be produced by polymerization of monomers comprising a C₁-C₆-alkyl (meth)acrylate. Suitable C₁-C₆-alkyl (meth)acrylates include, for example, methyl acrylate, ethyl acrylate, butyl acrylate, methyl methacrylate, ethyl methacrylate, butyl methacrylate, and combinations thereof. In some embodiments, the C₁-C₆-alkyl (meth)acrylate comprises methyl methacrylate, and the shell comprises poly(methyl methacrylate).

The monomers used to form the shell can, optionally, further comprise a monomer comprising at least two polymerizable carbon-carbon double bonds. Examples of such monomers include allyl acrylate, allyl methacrylate, ethyleneglycol dimethacrylate, 1,3-butyleneglycol dimethacrylate, divinylbenzene, and combinations thereof.

The monomers used to form the shell can, optionally, further comprise a graftlinking monomer to facilitate grafting of the shell to the core. Such monomers include at least one hydrolyzable group bound to a silicon atom, and at least one polymerizable carbon-carbon double bond. Examples include, for example, methacryloyloxypropylmethoxydimethylsilane, methacryloyloxypropyldimethoxymethylsilane, vinyldimethoxymethylsilane, vinylphenylmethoxymethylsilane, and vinylphenyldimethoxysilane. In some embodiments, the shell-forming monomers comprise a graftlinking monomer and a monomer comprising at least two polymerizable carbon-carbon double bonds.

Core-shell impact modifiers and methods for their preparation are known and described, for example, in U.S. Patent No. 6,153,694 to Miyatake et al., and U.S. Patent Application Publication No. US 2008/0242797 A1 of Saegusa et al. Core-shell impact modifiers are also commercially available as, for example, KANE ACE™ MR Series resins from Kaneka.

When the shell composition comprises a core-shell impact modifier, it can be present in an amount of 1 to 10 weight percent, based on the total weight of the shell composition. Within this range, the core-shell impact modifier content of the shell composition can be 1.5 to 6 weight percent.

In some embodiments, the shell composition comprises, based on the total weight of the shell composition, 30 to 75 weight percent of the polyetherimide, 20 to 60 weight percent of a block polyestercarbonate, 4 to 20 weight percent of a block polycarbonate-polysiloxane, and 1 to 10 weight percent of a block polyetherimide-polysiloxane that is the same as or different from the block polyetherimide-polysiloxane of the core composition.

In some embodiments, the shell composition comprises, based on the total weight of the shell composition, 30 to 75 weight percent of the polyetherimide, 10 to 30 weight percent of a block polyestercarbonate, 10 to 30 weight percent of a block polyestercarbonate-polysiloxane, 4 to 20 weight percent of a block polycarbonate-polysiloxane, and 1 to 10 weight percent of a core-shell impact modifier.

In some embodiments, the core composition and the shell composition each exclude one of, or at least two of, or all of polycarbonates (including polycarbonate homopolymers, as well as polycarbonate copolymers in which each repeat unit comprises a carbonate linkage), polyesters (including polyester homopolymers, as well as polyester copolymers in which each repeat unit comprises an ester linkage), polyestercarbonates comprising ester units comprising a divalent aliphatic group, styrene-acrylonitrile copolymers, and acrylonitrile-butadiene-styrene terpolymers. It will be understood that these optionally excluded polymers are chemically distinct from block polycarbonate-polysiloxanes, block polyestercarbonates, block polyestercarbonate-polysiloxanes, polycarbonate-polysiloxanes, and block polyetherimide-polysiloxanes.

In a specific embodiment of the core-shell filament, the core composition comprises at least 90 weight percent of the block polyetherimide-polysiloxane; the shell composition comprises 30 to 75 weight percent of the polyetherimide, 20 to 60 weight percent of a block polyestercarbonate, 4 to 20 weight percent of a block polycarbonate-polysiloxane, and 1 to 10 weight percent of a block polyetherimide-polysiloxane that is the same as or different from the block polyetherimide-polysiloxane of the core composition; and the filament comprises, based on the volume of the filament, 10 to 90 volume percent of the core and 10 to 90 volume percent of the shell.

Another embodiment is a method of making a core-shell filament, comprising: coextruding a core composition and a shell composition to form a core-shell filament comprising a core and a shell surrounding and in contact with the core; wherein the core composition comprises, based on the weight of the core composition, at least 50 weight percent of a block polyetherimide-polysiloxane; and wherein the shell composition comprises, based on the weight of the shell composition, at least 30 weight percent of a polyetherimide. All of the above described variations of the core-shell filament apply as well to the method of making a core-shell filament.

In a specific embodiment of the method of making a core-shell filament, the core composition comprises at least 90 weight percent of the block polyetherimide-polysiloxane; the shell composition comprises 30 to 75 weight percent of the polyetherimide, 20 to 60 weight percent of a block polyestercarbonate, 4 to 20 weight percent of a block polycarbonate-polysiloxane, and 1 to 10 weight percent of a block polyetherimide-polysiloxane that is the same as or different from the block polyetherimide-polysiloxane of the core composition; and the filament comprises, based on the volume of the filament, 10 to 90 volume percent of the core and 10 to 90 volume percent of the shell.

Another embodiment is a method of fused filament fabrication, comprising: melt extruding a core-shell filament to form an extrudate; and depositing the extrudate in a predetermined pattern to form a plurality of layers collectively forming the article, wherein each layer contacts at least one other layer; wherein the core-shell filament comprises a core, and a shell surrounding and in contact with the core; wherein the core comprises a core composition comprising, based on the weight of the core composition, at least 50 weight percent of a block polyetherimide-polysiloxane; and wherein the shell comprises a shell composition comprising, based on the weight of the shell composition, at least 30 weight percent of a polyetherimide. In some embodiments, melt extruding is conducted using a nozzle temperature of 350 to 400 °C, or 355 to 395 °C. In some embodiments, depositing the extrudate is conducted at an oven temperature of 160 to 210 °C, or 170 to 200 °C.

Fused filament fabrication is a known method of additive manufacturing, and equipment for fused filament fabrication is commercially available. The working examples below illustrate suitable conditions for conducting fused filament fabrication with the core-shell filament. As demonstrated in the working examples, the core-shell structure of the filament can be substantially preserved in the printed article, such that only the shell composition is exposed only surface of the printed article. As a result, the article exhibits the desirable heat resistance and interlayer adhesion of the shell composition, while also exhibiting improved impact strength derived from the core composition.

In a specific embodiment of the method of fused filament fabrication, the core composition comprises at least 90 weight percent of the block polyetherimide-polysiloxane; the shell composition comprises 30 to 75 weight percent of the polyetherimide, 20 to 60 weight percent of a block polyestercarbonate, 4 to 20 weight percent of a block polycarbonate-polysiloxane, and 1 to 10 weight percent of a block polyetherimide-polysiloxane that is the same as or different from the block polyetherimide-polysiloxane of the core composition; and the filament comprises, based on the volume of the filament, 10 to 90 volume percent of the core and 10 to 90 volume percent of the shell.

Another embodiment is an article formed by the method of fused filament fabrication. Examples of articles formed by the method include parts for aerospace interiors (including personal service units, window reveals, ventilation grills, seats and seat backs, trim components, and handles) and parts for ground transportation interiors (including seats and seat backs, and handles). The impact resistance of the articles can be tailored by adjusting the ratio of core to shell in the filament. In a specific embodiment of the article, the core composition comprises at least 90 weight percent of the block polyetherimide-polysiloxane; the shell composition comprises 30 to 75 weight percent of the polyetherimide, 20 to 60 weight percent of a block polyestercarbonate, 4 to 20 weight percent of a block polycarbonate-polysiloxane, and 1 to 10 weight percent of a block polyetherimide-polysiloxane that is the same as or different from the block polyetherimide-polysiloxane of the core composition; and the filament comprises, based on the volume of the filament, 10 to 90 volume percent of the core and 10 to 90 volume percent of the shell.

All ranges disclosed herein are inclusive of the endpoints, and the endpoints are independently combinable with each other. Each range disclosed herein constitutes a disclosure of any point or sub-range lying within the disclosed range.

The invention is further illustrated by the following non-limiting examples.

### EXAMPLES

Components used to form filaments are summarized in Table 1.

**Table 1**

| Component | Description |
|---|---|
| PEI | Poly[2,2-*bis*(4-(3,4-dicarboxyphenoxy)phenyl)propane)-1,3-phenylene bisimide] having a melt flow rate of 7-11 grams/10 minutes measured at 337 °C and 6.6 kilogram force according to ASTM D1238-13; obtained as ULTEM™ 1000 resin from SABIC. |
| PCE | A *para*-cumylphenol-capped block polyestercarbonate with polyester blocks containing 1,3-phenylene isophthalate-*co*-terephthalate units and carbonate blocks containing bisphenol A carbonate units and resorcinol carbonate units; the polyestercarbonate having, based on total moles of ester units and carbonate units, about 82 mole percent 1,3-phenylene isophthalate-*co*-terephthalate units, about 9 mole percent resorcinol carbonate units, and about 9 mole percent bisphenol A carbonate units; and the polyestercarbonate having a weight average molecular weight of about 20,000 grams/mole; preparable according to the procedure of Comparative Example 2-4 of U.S. Patent No. 7,790,292 B2 to Colborn. |
| PC-Si | A *para*-cumylphenol-capped block polycarbonate-polysiloxane with polycarbonate blocks containing bisphenol A carbonate units and polysiloxane blocks derived from a eugenol-dicapped polydimethylsiloxane macromer having an average of about 45 dimethylsiloxane units per molecule; the polycarbonate-polysiloxane having a polycarbonate content of about 80 weight percent, and a polysiloxane content of about 20 weight percent, based on the weight of the polycarbonate-polysiloxane; and the polycarbonate-polysiloxane having a weight average molecular weight of 28,000-32,000 grams/mole; preparable according to the procedure of paragraphs [0061] to [0064] of International Patent Application Publication No. WO 2017/019969 A1 of Hoover et al. |
| PEI-Si 1 | A block polyetherimide-polysiloxane formed by imidization of the reaction product of *meta*-phenylenediamine, 2,2-*bis*(4-(3,4-dicarboxyphenoxy)phenyl)propane dianhydride, and a 3-amino-1-propyl-capped polydimethylsiloxane macromer having an average of about 10 |
| | dimethylsiloxane units per molecule; the polyetherimide-polysiloxane having a polyetherimide content of about 60 weight percent, and a polysiloxane content of about 40 weight percent; preparable according to the procedure for "Preparation of Polysiloxane/Polyimide Block Copolymer 1 (BC1)" on page 9 of U.S. Patent Application Publication No. US 2007/0299215 A1 of Banerjee et al, published 27 December 2007. |
| PEI-Si 2 | A block polyetherimide-polysiloxane formed by imidization of the reaction product of *meta*-phenylenediamine, 2,2-*bis*(4-(3,4-dicarboxyphenoxy)phenyl)propane dianhydride, and a 3-amino-1-propyl-capped polydimethylsiloxane macromer having an average of about 10 dimethylsiloxane units per molecule; the polyetherimide-polysiloxane having a polyetherimide content of about 80 weight percent, and a polysiloxane content of about 20 weight percent; preparable according to the procedure for "Preparation of Polysiloxane/Polyimide Block Copolymer 2 (BC2)" on page 9 of U.S. Patent Application Publication No. US 2007/0299215 A1 of Banerjee et al, published 27 December 2007. |
| Stabilizer | Tris(2,4-di-tert-butylphenyl)phosphite, CAS Reg. No. 31570-04-4; obtained from BASF as IRGAFOS 168. |

A shell composition is summarized in Table 2, where component amounts are expressed in weight percent based on the total weight of the shell composition. The composition was prepared by melt blending components in an extruder at a temperature of about 280 to 330 °C. The extrudate was pelletized, and the pellets were dried for about 4 hours at 135 °C before use in preparing filaments.

**Table 2**

| | Shell A |
|---|---|
| PEI | 49.9 |
| PCE | 39.0 |
| PC-Si | 8.0 |
| PEI-Si 1 | 3.0 |
| Stabilizer | 0.1 |

Core compositions are summarized in Table 3, where component amounts are expressed in weight percent based on the total weight of the core composition. The Core C composition was prepared by blending the PEI-Si 1 and PEI-Si 2 components in an extruder at a temperature of about 270 to 320 °C. Pellets of the core compositions were dried for about 5 hours at 110 °C before use in preparing filaments.

**Table 3**

| | Core A | Core B | Core C |
|---|---|---|---|
| PEI-Si 1 | 100.00 | 0.00 | 40.00 |
| PEI-Si 2 | 0.00 | 100.00 | 60.00 |

Filament compositions are summarized in Table 4. In the table, "Filament structure" indicates whether a filament has a core-shell structure (i.e., containing two compositions) or a monofilament structure (i.e., containing one composition); "Shell:Core ratio" is the ratio of shell volume to core volume.

Core-shell filaments were produced by coextrusion. Core and shell materials were melted in individual extruders equipped with precision melt pumps. The extruder melt temperatures were about 320 °C for the core materials and about 330 °C for the shell material. The melt streams exiting the two extruders were combined in a core-shell spin pack to form a core-shell structure. The final spinneret of the core-shell spin pack had a die with a length of 16 millimeters and a circular opening with a diameter of 4 millimeters. After extrusion, the filament entered an air cabinet for cooling and drawing down to an outer diameter of 1.80 millimeters via incremental increases in puller line speed. Before the filament was wound up on a reel, the final filament diameter was determined in-line using a dual-axis, high speed, high precision scanning micrometer obtained from Keyence (Itasca, Illinois, USA). Variations in core-to-shell volume ratio were controlled by changing metering pump speeds. At a constant filament outer diameter of 1.80 millimeters, the core diameters of 1.00, 1.20, and 1.37 specified in Table 4 correspond to core to shell volume ratios of about 31:69 (0.45:1), 44:56 (0.80:1), and 58:42 (1.38:1).

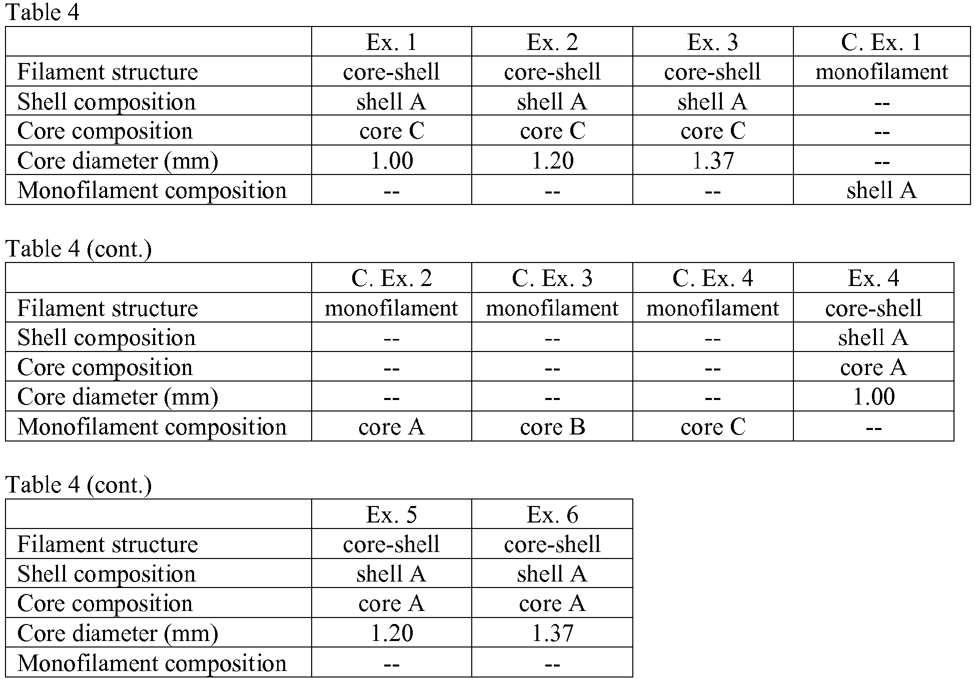

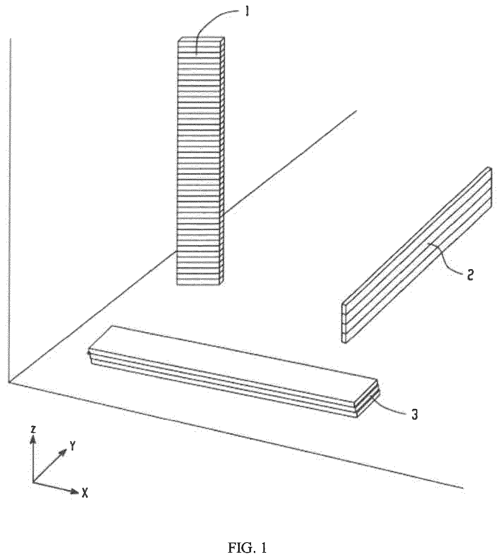

Three dimensional test articles were printed from the filaments using fused filament fabrication. Printing was conducted on a STRATASYS™ 400 or 900 printer operating at a 375 °C nozzle temperature and a 185 °C oven temperature. Figure 1 illustrates three possible print orientations. The orientation labeled 1 has an XZ orientation and is referred to as "upright"; the orientation labeled 2 has a YZ orientation and is referred to as "on-edge"; and the orientation labeled 3 has an XY orientation and is referred to as "flat". In this experiment, test articles were printed in the "flat" orientation. Test articles could not be printed from the Comparative Example 2-4 filaments, which were monofilaments containing only polyetherimide-polysiloxane copolymer, because of poor adhesion between printed layers. Tensile properties were determined at 23 °C according to ASTM D638-14 using a test speed of 5 millimeters/minute. Values for tensile strength at break and tensile modulus are expressed in units of megapascals (MPa). Values for tensile elongation at break are expressed in units of percent (%). Notched Izod impact strength values, expressed in units of joules per meter (J/m), were determined at 23 °C according to ASTM D256-10e1 using a pendulum energy of 2.71 joules (2 foot-pounds). Unnotched Izod impact strength values, expressed in units of joules per meter (J/m), were determined at 23 °C according to ASTM D4812-11 using a pendulum energy of 2.71 joules (2 foot-pounds).

Results are presented in Table 5. Relative to articles printed from the Comparative Example 2 monofilament containing the Shell A composition, articles printed from the Examples 1-6 core-shell monofilaments exhibited large increases in tensile elongation at break and notched and unnotched Izod impact strength.

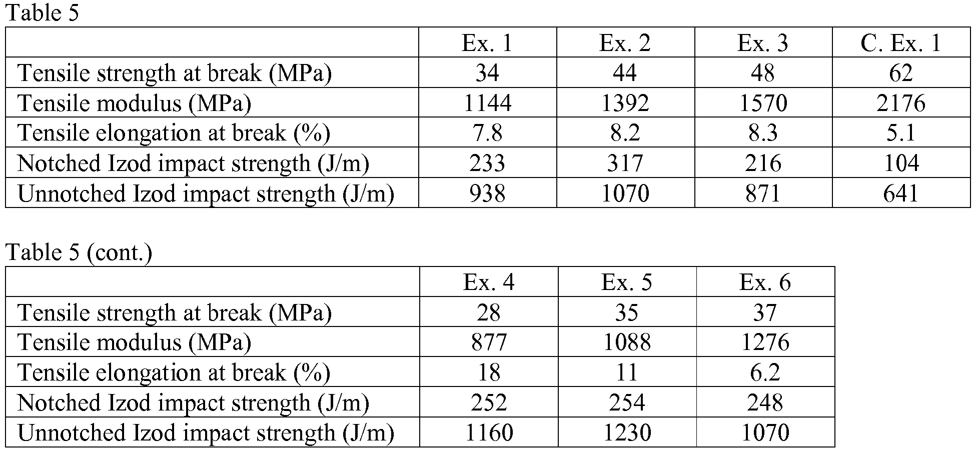

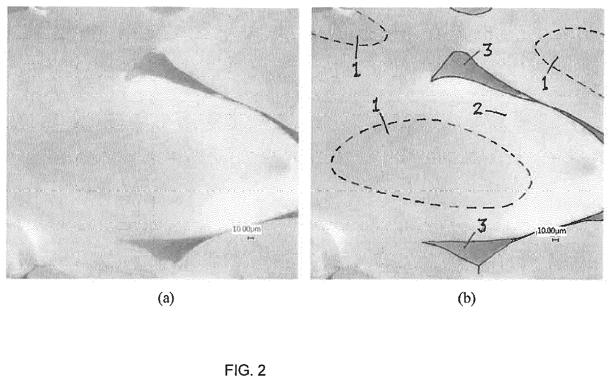

Figure 2 is an optical micrograph of a cross-section of a test article printed from the Example 3 filament. The cross-section was taken along the Y axis of the flat (XY) print orientation. Part (a) of the figure is the micrograph, unaltered except for the addition of a scale bar and scale bar label. Part (b) of the figure is the same micrograph, with part numbers added to identify different regions of the micrograph, and lines added to highlight the boundaries between the different regions. Specifically, in part (b), regions 1 correspond to core material, region 2 correspond to shell material, and regions 3 correspond to voids in the printed structure. Note that in the printed article, the filament structure is preserved to the extent that core material remains surrounded by shell material. This structure is important because it allows the shell material to provide good interlayer adhesion and the core material to provide good ductility.

The invention includes at least the following aspects.
Aspect 1: A core-shell filament for fused filament fabrication, comprising: a core; and a shell surrounding and in contact with the core; wherein the core comprises a core composition comprising, based on the weight of the core composition, at least 50 weight percent of a block polyetherimide-polysiloxane; and wherein the shell comprises a shell composition comprising, based on the weight of the shell composition, at least 30 weight percent of a polyetherimide.
Aspect 2: The core-shell filament of aspect 1, wherein the core composition comprises at least 90 weight percent of the block polyetherimide-polysiloxane.
Aspect 3: The core-shell filament of aspect 1 or 2, wherein the shell composition further comprises, based on the weight of the shell composition, 15 to 60 weight percent of a block polyestercarbonate.
Aspect 4: The core-shell filament of any one of aspects 1-3, wherein the shell composition further comprises, based on the weight of the shell composition, 10 to 30 weight percent of a block polyestercarbonate-polysiloxane.
Aspect 5: The core-shell filament of any one of aspects 1-4, wherein the shell composition further comprises, based on the weight of the shell composition, 4 to 20 weight percent of a block polycarbonate-polysiloxane.
Aspect 6: The core-shell filament of any one of aspects 1-5, wherein the shell composition further comprises, based on the weight of the shell composition, 1 to 10 weight percent of a block polyetherimide-polysiloxane that is the same as or different from the block polyetherimide-polysiloxane of the core composition.
Aspect 7: The core-shell filament of aspect 1 or 2, wherein the shell composition comprises, based on the total weight of the shell composition, 30 to 75 weight percent of the polyetherimide, 20 to 60 weight percent of a block polyestercarbonate, 4 to 20 weight percent of a block polycarbonate-polysiloxane, and 1 to 10 weight percent of a block polyetherimide-polysiloxane that is the same as or different from the block polyetherimide-polysiloxane of the core composition.
Aspect 8: The core-shell filament of any one of aspects 1-7, wherein the filament comprises, based on the volume of the filament, 10 to 90 volume percent of the core and 10 to 90 volume percent of the shell.
Aspect 9: The core-shell filament of aspect 1, wherein the core composition comprises at least 90 weight percent of the block polyetherimide-polysiloxane; wherein the shell composition comprises 30 to 75 weight percent of the polyetherimide, 20 to 60 weight percent of a block polyestercarbonate, 4 to 20 weight percent of a block polycarbonate-polysiloxane, and 1 to 10 weight percent of a block polyetherimide-polysiloxane that is the same as or different from the block polyetherimide-polysiloxane of the core composition; and wherein the filament comprises, based on the volume of the filament, 10 to 90 volume percent of the core and 10 to 90 volume percent of the shell.
Aspect: 10: A method of making a core-shell filament, comprising: coextruding a core composition and a shell composition to form a core-shell filament comprising a core and a shell surrounding and in contact with the core; wherein the core composition comprises, based on the weight of the core composition, at least 50 weight percent of a block polyetherimide-polysiloxane; and wherein the shell composition comprises, based on the weight of the shell composition, at least 30 weight percent of a polyetherimide.
Aspect 11: The method of aspect 10, wherein the core composition comprises at least 90 weight percent of the block polyetherimide-polysiloxane; wherein the shell composition comprises 30 to 75 weight percent of the polyetherimide, 20 to 60 weight percent of a block polyestercarbonate, 4 to 20 weight percent of a block polycarbonate-polysiloxane, and 1 to 10 weight percent of a block polyetherimide-polysiloxane that is the same as or different from the block polyetherimide-polysiloxane of the core composition; and wherein the filament comprises, based on the volume of the filament, 10 to 90 volume percent of the core and 10 to 90 volume percent of the shell.
Aspect 12: A method of fused filament fabrication, comprising: melt extruding a core-shell filament to form an extrudate; and depositing the extrudate in a predetermined pattern to form a plurality of layers collectively forming the article, wherein each layer contacts at least one other layer; wherein the core-shell filament comprises a core, and a shell surrounding and in contact with the core; wherein the core comprises a core composition comprising, based on the weight of the core composition, at least 50 weight percent of a block polyetherimide-polysiloxane; and wherein the shell comprises a shell composition comprising, based on the weight of the shell composition, at least 30 weight percent of a polyetherimide.
Aspect 13: The method of aspect 12, wherein the core composition comprises at least 90 weight percent of the block polyetherimide-polysiloxane; wherein the shell composition comprises 30 to 75 weight percent of the polyetherimide, 20 to 60 weight percent of a block polyestercarbonate, 4 to 20 weight percent of a block polycarbonate-polysiloxane, and 1 to 10 weight percent of a block polyetherimide-polysiloxane that is the same as or different from the block polyetherimide-polysiloxane of the core composition; and wherein the filament comprises, based on the volume of the filament, 10 to 90 volume percent of the core and 10 to 90 volume percent of the shell.
Aspect 14: An article formed by the method of aspect 12.
Aspect 15: The article of aspect 14, wherein the core composition comprises at least 90 weight percent of the block polyetherimide-polysiloxane; wherein the shell composition comprises 30 to 75 weight percent of the polyetherimide, 20 to 60 weight percent of a block polyestercarbonate, 4 to 20 weight percent of a block polycarbonate-polysiloxane, and 1 to 10 weight percent of a block polyetherimide-polysiloxane that is the same as or different from the block polyetherimide-polysiloxane of the core composition; and wherein the filament comprises, based on the volume of the filament, 10 to 90 volume percent of the core and 10 to 90 volume percent of the shell.

## Claims

1. A core-shell filament for fused filament fabrication, comprising:
a core; and
a shell surrounding and in contact with the core;
wherein the core comprises a core composition comprising, based on the weight of the core composition, at least 50 weight percent of a block polyetherimide-polysiloxane; and
wherein the shell comprises a shell composition comprising, based on the weight of the shell composition, at least 30 weight percent of a polyetherimide.

2. The core-shell filament of claim 1, wherein the core composition comprises at least 90 weight percent of the block polyetherimide-polysiloxane.

3. The core-shell filament of claim 1 or 2, wherein the shell composition further comprises, based on the weight of the shell composition, 15 to 60 weight percent of a block polyestercarbonate.

4. The core-shell filament of any one of claims 1-3, wherein the shell composition further comprises, based on the weight of the shell composition, 10 to 30 weight percent of a block polyestercarbonate-polysiloxane.

5. The core-shell filament of any one of claims 1-4, wherein the shell composition further comprises, based on the weight of the shell composition, 4 to 20 weight percent of a block polycarbonate-polysiloxane.

6. The core-shell filament of any one of claims 1-5, wherein the shell composition further comprises, based on the weight of the shell composition, 1 to 10 weight percent of a block polyetherimide-polysiloxane that is the same as or different from the block polyetherimide-polysiloxane of the core composition.

7. The core-shell filament of claim 1 or 2, wherein the shell composition comprises, based on the total weight of the shell composition,
30 to 75 weight percent of the polyetherimide,
20 to 60 weight percent of a block polyestercarbonate,
4 to 20 weight percent of a block polycarbonate-polysiloxane, and
1 to 10 weight percent of a block polyetherimide-polysiloxane that is the same as or different from the block polyetherimide-polysiloxane of the core composition.

8. The core-shell filament of any one of claims 1-7, wherein the filament comprises, based on the volume of the filament, 10 to 90 volume percent of the core and 10 to 90 volume percent of the shell.

9. The core-shell filament of claim 1,
wherein the core composition comprises at least 90 weight percent of the block polyetherimide-polysiloxane;
wherein the shell composition comprises
30 to 75 weight percent of the polyetherimide,
20 to 60 weight percent of a block polyestercarbonate,
4 to 20 weight percent of a block polycarbonate-polysiloxane, and
1 to 10 weight percent of a block polyetherimide-polysiloxane that is the same as or different from the block polyetherimide-polysiloxane of the core composition; and
wherein the filament comprises, based on the volume of the filament, 10 to 90 volume percent of the core and 10 to 90 volume percent of the shell.

10. A method of making a core-shell filament, comprising:
coextruding a core composition and a shell composition to form a core-shell filament comprising a core and a shell surrounding and in contact with the core;
wherein the core composition comprises, based on the weight of the core composition, at least 50 weight percent of a block polyetherimide-polysiloxane; and
wherein the shell composition comprises, based on the weight of the shell composition, at least 30 weight percent of a polyetherimide.

11. The method of claim 10,
wherein the core composition comprises at least 90 weight percent of the block polyetherimide-polysiloxane;
wherein the shell composition comprises
30 to 75 weight percent of the polyetherimide,
20 to 60 weight percent of a block polyestercarbonate,
4 to 20 weight percent of a block polycarbonate-polysiloxane, and
1 to 10 weight percent of a block polyetherimide-polysiloxane that is the same as or different from the block polyetherimide-polysiloxane of the core composition; and
wherein the filament comprises, based on the volume of the filament, 10 to 90 volume percent of the core and 10 to 90 volume percent of the shell.

12. A method of fused filament fabrication, comprising:
melt extruding a core-shell filament to form an extrudate; and
depositing the extrudate in a predetermined pattern to form a plurality of layers collectively forming the article, wherein each layer contacts at least one other layer;
wherein the core-shell filament comprises a core, and a shell surrounding and in contact with the core;
wherein the core comprises a core composition comprising, based on the weight of the core composition, at least 50 weight percent of a block polyetherimide-polysiloxane; and
wherein the shell comprises a shell composition comprising, based on the weight of the shell composition, at least 30 weight percent of a polyetherimide.

13. The method of claim 12,
wherein the core composition comprises at least 90 weight percent of the block polyetherimide-polysiloxane;
wherein the shell composition comprises
30 to 75 weight percent of the polyetherimide,
20 to 60 weight percent of a block polyestercarbonate,
4 to 20 weight percent of a block polycarbonate-polysiloxane, and
1 to 10 weight percent of a block polyetherimide-polysiloxane that is the same as or different from the block polyetherimide-polysiloxane of the core composition; and
wherein the filament comprises, based on the volume of the filament, 10 to 90 volume percent of the core and 10 to 90 volume percent of the shell.

14. An article formed by the method of claim 12.

15. The article of claim 14,
wherein the core composition comprises at least 90 weight percent of the block polyetherimide-polysiloxane;
wherein the shell composition comprises
30 to 75 weight percent of the polyetherimide,
20 to 60 weight percent of a block polyestercarbonate,
4 to 20 weight percent of a block polycarbonate-polysiloxane, and
1 to 10 weight percent of a block polyetherimide-polysiloxane that is the same as or different from the block polyetherimide-polysiloxane of the core composition; and
wherein the filament comprises, based on the volume of the filament, 10 to 90 volume percent of the core and 10 to 90 volume percent of the shell.
